# EUROPEAN PATENT APPLICATION

(11) **EP 2 269 535 A1**
(43) Date of publication of application: **05.01.2011**
(21) Application number: 10164190.0
(22) Date of filing: 27.05.2010
(51) Int. Cl.: A61C 5/04, A61C 17/022

(54) **Blower for dental use**

(30) Priority: 01.07.2009 IT PD20090185
(71) Applicant: Spano Technology S.r.l., 35020 ALBIGNASEGO PD (IT)
(72) Inventor: Cohen, Simon, I-44123, Ferrara (IT); Spano, Ernesto, I-30174, Zelarino (VE) (IT)
(74) Representative: Gallo, Luca

(57) **Abstract**

A blower for dental use, which comprises a support structure (1), an air source and a handpiece (28). Said handpiece is connected to a pipe (14) supplying air to be blown in, which is produced by the air source, and a blowing nozzle (13) for the air received from the supply pipe (14).

The blower 10 also comprises means (12) for heating the air to be blown in, which means are mounted within the handpiece (28) so as to heat the air received from the supply pipe (14) and release it, heated, to the blowing nozzle (13).

The air source comprises a compressor (11) which is housed inside the support structure (1) and is connected to the handpiece (28) by means of the air supply pipe (14) and produces a constant air flow having a pressure when leaving the blowing nozzle (13) of between 0.1 and 1 bar. The blowing nozzle (13) has a maximum outer dimension ranging between 0.4 and 1.3 mm and is able to be inserted inside endodontic canals so as to inject the air expelled from it into endodontic canals, once inserted therein.

## Description

### Field of application

The present invention relates to a blower for dental use, according to the preamble of the independent claim No. 1.

The blower in question is intended to be used in the dental sector, in particular for drying the pulp canal of a tooth during endodontic surgery.

During operation, the aforementioned blower is designed to emit a controlled air flow intended to be advantageously conveyed inside a pulp canal so as to dry the liquid present therein.

### Background art

As is known, nowadays, in the dentistry sector, in order to dry endodontic canals, special-size, absorbent, paper cones are used. These cones, when inserted into the canal to be dried, absorb the liquid remaining there, drying the canal at least partially.

These paper cones, however, in practice are not devoid of drawbacks. One major drawback is the fact that these paper cones have a limited drying efficiency. In order to remove completely the liquid present inside a canal, the dentist is therefore obliged to user several paper cones, repeating several times the operations of inserting and removing said cones into/from the pulp canal. The operation of drying the canal is therefore slow and may cause discomfort for the patient.

Moreover, the paper cones, since they are intrusive, may cause bleeding and/or pain for the patient.

Generally, during dental surgery, it is necessary to keep the working zone clean and as far as possible dry by means of irrigation with water, disinfectants, or drugs and by blowing in air. For this purpose, dentists make use of apparatus with one or more handpieces which are connected, via a supply pipe, to one or more reservoirs containing water or medicinal fluids in general or are connected to an air source, so as to convey easily these fluids or the air inside the patient's mouth, in particular in the working zone. The patent EP 1,138,275, for example, describes an apparatus for introducing fluids into the oral cavity, which apparatus comprises a first handpiece, provided with a nozzle for spraying a fluid inside the oral cavity, and a plurality of reservoirs, each of which is able to contain a different fluid and is connected to the first handpiece by means of a fluid supply pipe. The apparatus also comprises an air inlet pipe which is connected to a pressurised-air source and has a plurality of branched sections each leading to a reservoir for blowing into it pressurised air and pushing the fluid contained inside it along the corresponding supply pipe towards the handpiece. The apparatus is equipped with a variable pressure regulator so as to allow the dentist to regulate the pressure of the air entering the reservoirs and consequently regulate the pressure and the flowrate of the fluid emitted from the nozzle. The apparatus also comprises a second handpiece connected to the pressurised-air source and provided with a nozzle for blowing in air into the working zone situated inside the oral cavity of the patient.

Moreover, in accordance with the operating diagram shown on page 3 of this patent, the air pipe which supplies the reservoirs for the delivery of fluids via the first handpiece and which supplies the second handpiece for delivery of the air has a fixed pressure regulator arranged along it. This pressure regulator adjusts the air flow of the dental surgery's supply system to an optimum pressure value suitable for conveying to the variable pressure regulator intended to regulate the flow of the fluids.

The optimum pressure of the fixed pressure regulator is, however, incompatible with the requirements for drying the endodontic canals of the teeth and therefore the second handpiece is suitable, as is moreover mentioned in the same patent, only for blowing in air into the patient's mouth, but not into the endodontic canal.

The apparatus of the known type described above, therefore, is not suitable for use during endodontic surgery and in particular for blowing in air inside pulp canals in order to dry them. The nozzle of the second handpiece, in fact, is designed and suitable only for conveying an air flow inside the patient's oral cavity, but has characteristics which are not suitable for insertion thereof into the pulp canal of a tooth.

In greater detail, the nozzles of this known apparatus have dimensions and in particular a cross-section which is incompatible with a use which requires their insertion into the pulp canals of teeth.

Moreover, in this apparatus, the air supplied by the pressurised-air source is directly emitted from the second handpiece, without prior treatment. The air emitted by the second handpiece may therefore contain bacteria or pathogenic microorganisms which, if introduced inside a pulp canal during endodontic surgery, before occlusion of the canal, may prejudice the outcome of the operation and give rise to subsequent infections.

The apparatus described in this patent EP 1,138,275 provides the air at a pressure which is once again unsuitable for insertion into the pulp canal of the tooth.

An apparatus for introducing fluids into the oral cavity, able to be used in particular in endodontic surgery, is also known from the patent US 2007/0148615. The apparatus comprises a handpiece, provided with a nozzle for spraying a fluid inside the oral cavity, and a plurality of reservoirs, each able to contain a different fluid and connected to the handpiece by means of a fluid supply pipe. The apparatus also comprises an air inlet pipe which is connected to a pressurised-air source and has a plurality of branched sections each leading to a reservoir for blowing into it pressurised air and pushing the fluid contained inside it along the corresponding supply pipe towards the handpiece. A valve is provided between the air inlet pipe and its branched sections and is able to be operated by means of a switch, for example located on the handpiece, so as to convey the pressurised air to the reservoir containing the desired fluid, via the corresponding branched section, and prevent at the same time the introduction of air into the remaining branched sections. The apparatus is equipped with a pressure regulator so as to allow the dentist to regulate the pressure of the air entering the reservoirs and consequently regulate the pressure and flowrate of the fluid emitted from the nozzle. Moreover the handpiece is provided internally with heating means arranged in contact with the fluid supply ducts so as to heat the selected fluid before it is ejected through the nozzle.

The apparatus envisages using the air to force the various fluids out of the reservoirs. The apparatus does not envisage direct supplying of the handpiece with an air flow supplied by the pressurised-air source with the result that the flowrate of the air flow may vary following deformation of the reservoirs or the other parts of the circuit. Moreover, the air pressure required to convey a liquid to the handpiece is not compatible with the air pressure which is required in order to dry an endodontic canal.

In this connection, a first drawback of this apparatus of the known type described above consists in the fact that the fluid flowing out of the nozzle is supplied by means of control of a pressure regulator. In the case of endodontic surgery such a fluid supply is incompatible with safety requirements.

Endodontic surgery, in fact, envisages the injection of fluids or the blowing-in of air, inside the pulp canal, where bloods vessels and nerve ends are present. It is of extreme importance, therefore, that the pressure of the fluid injected into the canal should not be excessive so as to avoid pain or even injury to the patient. If, in fact, the air should be blown in with excessive pressure into the pulp canal, there could be the risk of causing damage to the pulp tissue or creating an emphysemic condition in the patient.

Moreover, in this apparatus, the temperature of the fluid emitted from the nozzle varies with variation in the pressure or the flowrate of the fluid conveyed to the handpiece and controlled by the pressure regulator. The heating means, in fact, exchange heat with the fluid supply ducts, irrespective of the flowrate of the fluid inside them. Therefore, in the event of a particularly low flowrate of the fluid emitted from the nozzle, the fluid itself may reach temperatures which are sufficiently high that they create discomfort or are even dangerous for the patient.

A further drawback of the apparatus of the known type mentioned above (in particular those described in the patents EP 1,138,275 and US 2007/0148615) consists in the structural complexity which significantly increases the overall cost of the apparatus. Another drawback of the known apparatus consists in the fact that there is no independent air supply source which is able to optimize the air supply for the purposes of drying the endodontic canals.

### Disclosure of the invention

In this situation, therefore, the problem forming the basis of the present invention is to overcome the drawbacks arising with the solutions of the known type mentioned above, by providing a blower for dental use, which is able to dry rapidly and effectively the endodontic canals in teeth.

A further object of the present invention is to provide a blower for dental use which is safe and operationally entirely reliable.

A further object of the present invention is to provide a blower for dental use which is structurally simple and easy to use.

Another object of the present invention is to provide a blower for dental use which may be produced at a low cost.

### Brief description of the drawings

The technical features of the invention, in accordance with the abovementioned objects, may be clearly determined from the contents of the claims below and the advantages thereof will emerge more clearly from the detailed description which follows, with reference to the accompanying drawings which illustrate a purely exemplary and non-limiting embodiment thereof, where:
- Figure 1 shows a simplified diagram of a blower according to the present invention.
- Figure 2 shows an exploded view of a handpiece envisaged which houses internally means for heating the blower according to the present invention;
- Figure 3 shows an exploded cross-sectional view of the handpiece according to Figure 2.

### Detailed description

In accordance with the figures of the accompanying drawings, 10 denotes in its entirety the blower for dental use according to the present invention. This blower is intended to be used advantageously for drying a pulp canal of a tooth during endodontic surgery.

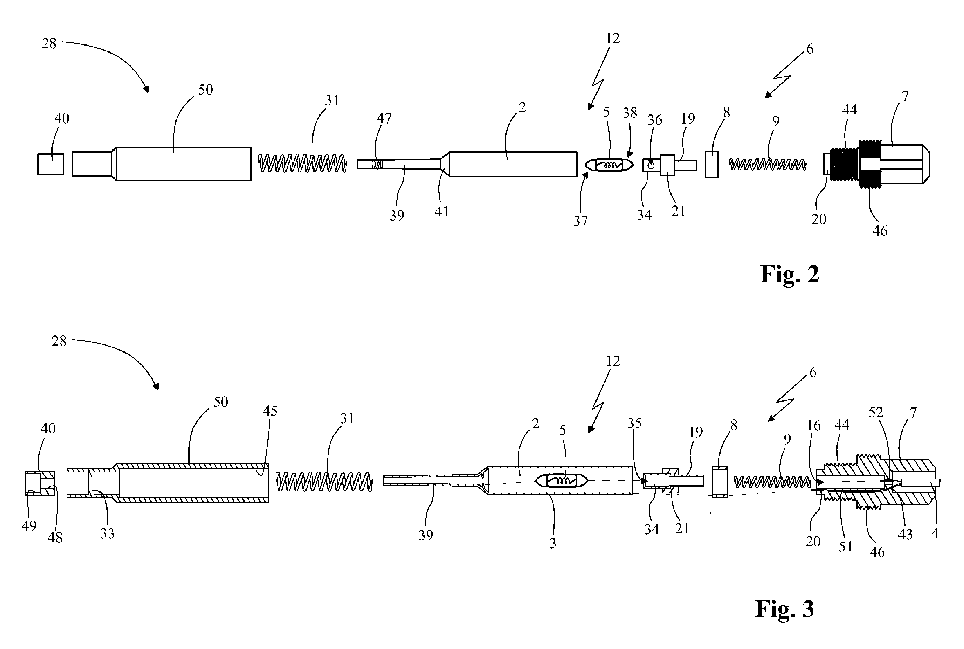

In accordance with the accompanying figures, the blower 10 comprises a support structure 1, which is advantageously box-shaped, an air source and a handpiece 28. The latter is connected to a pipe 14 supplying air to be blown in, which is produced by the air source, and a blowing nozzle 13 for the air received from the supply pipe 14. In greater detail, the handpiece 28 has a hollow support body 50 and is connected to the supply pipe 14 by means of a connector 7 which, in accordance with the embodiment shown in Figure 2, has a first threaded portion 44 designed to engage with a corresponding first portion 45 with matching thread provided on the hollow body 50 of the handpiece 28. The connector 7 also has a first through-hole 16 which is aligned with the direction of outflow of the air flow from the supply pipe 14 and is designed to receive the air flow conveyed by the latter from the air source so as to introduce it into the handpiece 28. The blower 10 also comprises means 12 for heating the air to be blown in, which means are mounted within the handpiece 28 so as to heat the air received from the supply pipe 14 and release it, heated, to the blowing nozzle 13.

The arrangement of the heating means 12 inside the handpiece 28 helps reduce to a minimum the effects of heat dispersion due to heat exchange between the heated air and the walls of the ducts inside which it flows before being ejected from the nozzle 13 and control more precisely the temperature of the air leaving the nozzle 13. In this way, in fact, the air is expelled from the nozzle 13 soon after being heated by the heating means 12, at the desired temperature.

According to the underlying idea of the present invention, the air source comprises a compressor 11 which is housed inside the support structure 1 and is connected to the handpiece 28 via the supply pipe 14. The compressor 11 is preferably of the volumetric type and is operated by means of a motor 18, in particular a d.c. motor.

This compressor 11 produces a constant air flow which has a pressure, when emitted from the blowing nozzle 13, of between 0.1 and 1 bar and preferably between 0.2 and 0.7 bar. The blowing nozzle 13 has a maximum outer dimension ranging between 0.4 and 1.3 mm and is able to be inserted inside endodontic canals so as to inject the air expelled from it into endodontic canals, once inserted therein.

In greater detail, the blower 10 comprises preferably two or more interchangeable nozzles 13 which each have a different maximum outer dimension. In this way, when the blower 10 is used, the user is able to select the nozzle 13 which is best suited for introduction into the specific endodontic canal inside which the air is to be blown. Advantageously, the nozzle 13 is made of a flexible polymer material which is able to be easily inserted inside an endodontic canal, whatever the shape of the latter, without causing discomfort or injury to the patient.

In order to guarantee the patient's safety and at the same time ensure optimal operating conditions for the blower 10, the air is emitted from the blower 10 at a controlled and constant pressure.

As mentioned above, in fact, the blower 10 is able to be used during endodontic surgery and, more particularly, the air blown in by it is intended to be introduced inside a pulp canal of a tooth in order to dry the liquid remaining inside said canal.

The pressure of the air emitted by the blower, therefore, must be sufficiently high to ensure rapid drying of the liquid still present inside the canal. However, the said pressure should not be excessively high, since an excessively high pressure could cause injury or at least create discomfort for the patient. The blower 10 according to the present invention emits a constant air flow which has a pressure when leaving the blowing nozzle 13 of between 0.1 and 1 bar.

The fact that the air is blown in by the blower 10 at a constant pressure or with a constant flowrate also ensures that the temperature of the air leaving the blower 10 is substantially constant.

In particular, the air flow emitted by the blower 10 advantageously has a temperature of between 35 and 70° C. and, preferably, a temperature of about 45° C.

Preheating of the air to a temperature higher than room temperature, before being blown inside the pulp canal, helps reduce the time needed for complete drying of the liquid remaining inside the pulp canal of a tooth. In greater detail, blowing air at a temperature of between 35 and 70° C inside said canal helps disperse the liquid present within the canal rapidly, but without this operation creating discomfort or injury for the patient. According to a preferred embodiment shown in the accompanying figures, the heating means 12 comprise an air through-flow chamber 2 which is passed through by the blowing air supplied by the supply pipe 14 and houses one or more heating elements 5 (preferably one heating element 5) able to heat the chamber 2 and the blowing air flowing out through the said chamber 2. The chamber 2 is connected to an outlet duct 39 for the heated blowing air, which transfers the blowing air from the chamber 2 to the nozzle 13. Advantageously, the outlet duct 39 is provided with a second externally threaded portion 47 able to engage with a corresponding second portion 48 with matching thread of a bush 40 for fastening to the nozzle 13. The bush 40, in particular, has, in addition to the second portion 48 with matching thread able to engage with the second threaded portion 47 formed on the outlet duct 39, a third portion 49 with matching thread able to engage with a thread provided on the nozzle 13, so as to retain the latter. Obviously, the bush 40 may be connected to the outlet duct 39 and the nozzle 13 by means of any type of joining system, such as a bayonet connection, without thereby departing from the scope of protection defined by the present patent.

In accordance with a preferred embodiment, the nozzle 13 is connected to the bush 40 by means of a fastening system comprising a helical track, formed inside the bush 40, and an engaging tooth, which extends from the outer surface of the nozzle 13, in a radial direction. The track, in particular, is formed inside the bush 40 between the edge which is connected to the nozzle 13 and an undercut formed in the bush 40 itself. The nozzle 13 is connected to the bush 40 by inserting the tooth of the nozzle 13 inside the track and then screwing the nozzle 13 into the bush 40, forcing the tooth to travel along the track until it engages inside the undercut. This fastening system ensures that there is a reliable connection between the nozzle 13 and the handpiece 28, whatever the value of the pressure of the air flow ejected from the nozzle 13.

Preferably, the walls 3 of the chamber 2 are made of a heat-conductive material so that the chamber 2 is easily heated by the heating element 5 and, together with the latter, helps heat the air flowing inside it. According to a preferred embodiment, the walls 3 of the chamber 2 form a single body with the outlet duct 39 and the chamber 2 has a portion 41 for joining to the outlet duct 39, which is tapered in the direction of outflow of the air so as to favour entry of said air inside the outlet duct 39.

According to the embodiment shown in Figures 2 and 3, the heating element 5 is an incandescent lamp, in particular of the "festoon" type.

Advantageously, the blower 10 is provided with means 15 for switching it on/off, which comprise an electronic control unit 32, a timer operationally connected to the electronic control unit 32, and a manually operated switch 29 for activating the electronic control unit 32.

In greater detail, the electronic control unit 32 is programmed to switch on firstly the heating means 12 and then, after a predetermined time interval set by the timer, switch on the motor 18 of the compressor 11. In particular, a time interval of about 60 seconds is already sufficient to ensure complete heating of the heating element 5 and the chamber 2. After this heating interval, the electronic control unit performs, for example by means of a control device 17, such as a relay, activation of the motor 18 of the compressor 11 such that the compressed air from the latter is conveyed, via the supply pipe 14, to the handpiece 28 where the heating element 12 and the chamber 2 are already heated and are consequently able to heat the air before it is expelled from the nozzle 13. In this way, the air expelled from the nozzle 13 is immediately at the desired temperature.

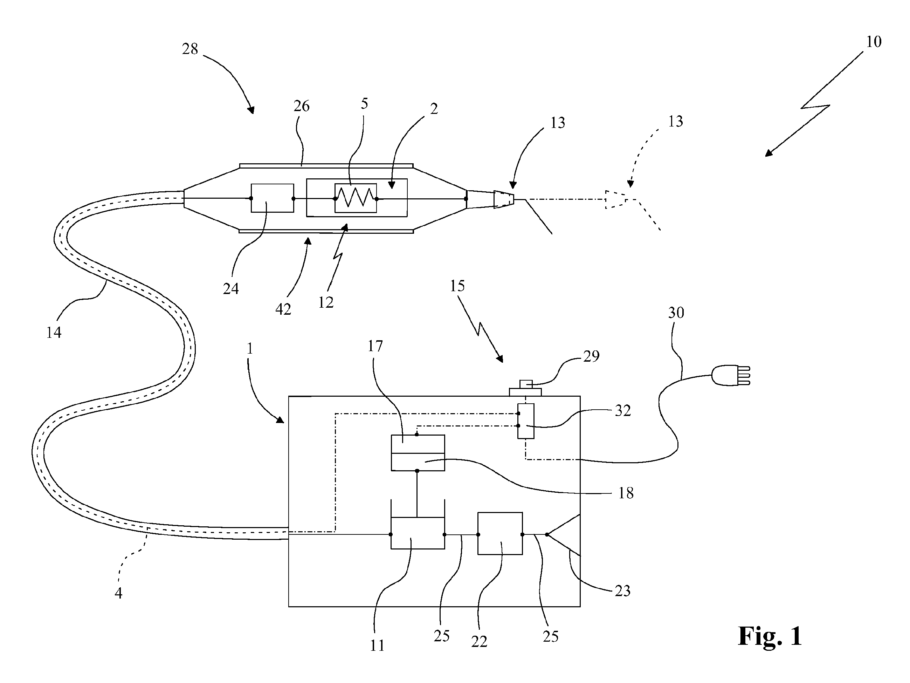

As shown in Figure 1, the switch 29 is advantageously located on the support structure 1. Alternatively, the switch 29 may be provided on the handpiece 28 such that the user is able to switch the blower 10 on and off easily by operating the switch 29 using the same hand which grips the handpiece 28.

According to a preferred embodiment, the blower 10 according to the present intention comprises a filter 22 for the air to be blown in, which is mounted on the support structure 1 and arranged along an intake line 25 for the air of the compressor 11, downstream of an intake mouth 23 of the said compressor 11.

The filter 22 removes the particles with impurities, bacteria and microorganisms in general present in the air entering the blower 10. The air is thus hygienically treated before being ejected from the nozzle 13, namely before being introduced into the pulp canal of the patient's tooth. In greater detail, the filter is advantageously able to retain particles with dimensions of up to 5 µm and is preferably made of a polyethylene terephthalate (PET) fabric.

Positioning of the filter 22 upstream of the compressor 11 connected to the inlet of the blower 10 helps protect the latter from dust particles or impurities accumulating inside it, thus preventing damage to the mechanical and electronic components which are housed in particular inside the support structure 1. Moreover, the filter 22, which is situated close to the intake mouth 23 of the compressor, may be easily accessed and therefore easily cleaned or replaced if necessary.

Advantageously, it is envisaged providing a dehumidifier 24 for the air to be blown in, this preferably being located inside the handpiece 28 upstream of the heating means 12 or, more generally, suitably arranged between the compressor 11 and the heating means 12.

The dehumidifier 24 reduces the moisture present in the air before it is ejected from the nozzle 13 and introduced into the pulp canal of a patient's tooth, thereby ensuring more rapid and effective drying of the said canal.

The blower 10 is advantageously connected to an electric power supply by means of a power supply cable 30. In greater detail, the power supply cable 30 is connected to the support structure 1 containing the compressor 11 and is operationally connected to the switch 29 such that the latter, when operated by the user, connects or disconnects the power supply to the electric components of the blower 10.

The blower 10 comprises a transformer (not shown) able to convert the 220 V alternating current supplied by the electric power source into 12 V direct current for powering the motor 18 of the compressor 11 and the heating means 12. In order to ensure maximum safety for the user of the blower 10 and for the patient, the transformer is advantageously an isolation transformer able to reduce the stray currents and the risk of microshocks. The blower 10 also comprises one or more cables 4 for electrically powering the handpiece 28, these being associated in particular with the pipe 14 supplying the air to be blown in. The cables 4 are able to convey electric current to the heating element 5 arranged inside the chamber 2 of the handpiece 28. For this purpose, the blower 10 comprises electrical connection means 6 which electrically connect the electric current cables 4 to the heating element 5.

In greater detail, the electrical connection means 6 comprise a first circuit section and a second circuit section. The first circuit section comprises a bush 8 which is made of conductive material and is electrically connected to a first conductor wire 51 of the cable 4, being mounted on the connector 7. The bush 8 is in particular mounted on an insulating portion 20 of the connector 7, extending from the first threaded portion 44 of the connector 7.

The first potential section also comprises one or more walls 3 of the air through-flow chamber 2. The walls 3 are made of an electrically conductive material and are in electrical contact with the bush 8 and with a first pole 34 of the heating element 5. The electrical contact between the bush 8 and the walls 3 of the air through-flow chamber 2 is ensured by a second resilient member 31 which is mounted on the outlet duct 39, coaxially therewith, bears against a first shoulder 33 provided inside the hollow body 50 of the handpiece 28 and acts on the joining portion 41 of the chamber 2, pushing the latter against the bush 8.

The second circuit section comprises a first resilient member 9 made of conductive material and consisting, for example, of a spring which is electrically connected to a second conductor wire 52 of the cable 4 and is mounted on the connector 7, in particular housed inside the first through-hole 16 of the connector 7, and bears against a second shoulder 43 provided there. The first resilient member 9 is electrically insulated from the bush 8 by means of the insulating portion 20 of the connector 7.

The second circuit section also comprises a pawl 19, which is made of conductive material and is mounted inside the air through-flow chamber 2 and partially inserted inside the first through-hole 16 of the connector 7, pressing against the first resilient member 9. The pawl 19 has a second through-hole 35 arranged coaxially with the first through-hole 16 of the connector 7. The first resilient member 9 acts against the pawl 19 so as to force it out of the connector 7, towards the inside of the chamber 2. The pawl 19 is electrically isolated from the bush 8 and the walls 3 of the chamber 2 of the first circuit section by means of the insulating portion 20 of the connector 7 and by means of the annular-shaped insulating body 21 mounted on the pawl 19, coaxially therewith. The pawl is also electrically in contact with the first resilient member 9 and with a second pole 35 of the heating element 5.

In greater detail, the pawl 19 has an enlarged head 34 which projects from the connector 7, towards the inside of the air through-flow chamber 2, and has, formed therein, a third through-hole 36 arranged transversely with respect to the second through-hole 35 of the pawl 19 and communicating therewith.

Electrical contact between the first pole 34 of the heating element 5 and the wall 3 of the chamber 2 and between the second pole 35 of the heating element 5 and the pawl 19 is ensured in particular by the first resilient member 9 which presses against the pawl 19, pushing it against the heating element 5. The pawl 19 pushes in turn the heating element 5 against the wall 3 of the chamber 2, in particular against one or more tongues made of conductive material and provided in the portion 41 joining the chamber 2 to the outlet duct 39.

In operational terms, when the blower 10 is switched on by means of the on/off means 15, the electronic control unit 32 effects transfer of electric power from an external source, along the power supply cable 30, to the first and second poles 34 and 35 of the heating element 5 via the cable conveying electric current to the handpiece 28 and via the first and second circuit sections described above, respectively. The heating element 5 then starts to heat up, also heating the chamber 2 through which the blowing air passes. After a predetermined time interval set by the timer, the electronic control unit 32 activates the motor 18 of the compressor 11 by means of the control device 17. The compressor then starts to convey the blowing air to the handpiece 28 via the supply pipe 14.

In greater detail, the compressed air flows along the supply pipe 14, enters into the first through-hole 16 of the connector 7 and then into the second through-hole 35 of the pawl 19 and, finally, enters via the third through-hole 36 formed in the enlarged head 34 of the pawl 19 into the chamber 2. The air is heated there by the heating element 5 and by the chamber 2 itself and then flows out through the outlet duct 39 until it is expelled from the nozzle 13.

Advantageously, the blower 10 comprises a protective casing 26 which is made of thermally insulating polymer material and covers externally at least one gripping portion 42 of the handpiece 28 intended to be gripped by a user, during operation of the blower 10. The thermally insulating protective casing 26 therefore allows the user to grip safely the handpiece 28, even in the event of prolonged use of the blower 10. According to a preferred embodiment, the protective casing 26 is mounted on the connector 7. In particular, a fourth portion with matching thread, formed inside the casing, is engaged with a fourth threaded portion 46 of the connector 7. A gap advantageously remains between the hollow body 50 of the handpiece 28 and the protective casing 26, thereby favouring thermal insulation of the casing with respect to the handpiece 28.

The invention thus conceived therefore achieves the predefined objects.

Obviously, it may assume, during its practical realization, also forms and configurations different from that illustrated above, without thereby departing from the present scope of protection. Moreover, all the details may be replaced by technically equivalent elements and the forms, dimensions, and materials used may be of any nature according to requirements.

## Claims

1. Blower for dental use, comprising:
- a support structure (1);
- an air source;
- a handpiece (28) connected:
- to a pipe (14) supplying air to be blown in, which is produced by said air source;
- to a blowing nozzle (13) for the air received from said supply pipe (14).
- means (12) for heating the air to be blown in, which are mounted inside said handpiece (28) so as to heat the air received from said supply pipe (14) and release it, heated, to said blowing nozzle (13);
**characterized in** the said air source comprises a compressor (11) which is housed inside said support structure (1), is connected to said handpiece (28) by means of said supply pipe (14) and produces a constant air flow having a pressure when leaving said blowing nozzle (13) of between 0.1 and 1 bar, said blowing nozzle (13) having a maximum outer dimension ranging between 0.4 and 1.3 mm and being able to be inserted inside endodontic canals so as to inject the air expelled from it into endodontic canals, once inserted therein.

2. Blower according to Claim 1, **characterized by** the emission of an air flow having a substantially constant temperature of between 35 and 70° C.

3. Blower according to Claim 1, **characterized in that** it comprises means (15) for switching it on/off, which comprise:
- an electronic control unit (32);
- a timer, operationally connected to said electronic control unit (32);
- a manually operated switch (29) for activating said electronic control unit (32) which is programmed so as to switch on firstly said heating means (12) and then, after a predetermined time interval set by said timer, switch on the motor (18) of said compressor (11).

4. Blower according to one or more of the preceding claims, **characterized in that** it comprises a filter (22) for the air to be blown in, which is made of a polyethylene terephthalate (PET) fabric and is mounted on said support structure (1), being arranged along an intake line (25) for the air of said compressor (11).

5. Blower according to one or more of the preceding claims, **characterized in that** it comprises a dehumidifier (24) for the air to be blown in, which is arranged between said compressor (11) and said heating means (12).

6. Blower according to one or more of the preceding claims, **characterized in** the said heating means (12) comprise an air through-flow chamber (2) which is passed through by the blowing air supplied by said supply pipe (14) and houses at least one heating element (5) able to heat said air through-flow chamber (2) and the blowing air flowing out through said chamber (2).

7. Blower according to Claim 6, **characterised in that** said heating element (5) is an incandescent lamp, in particular of the "festoon" type.

8. Blower according to one or more of the preceding claims, **characterized in that** it comprises at least one cable (4) for electrically powering said handpiece (28), associated with said pipe (14) supplying the air to be blown in.

9. Blower according to Claims 6 and 8, **characterized in that** it comprises electrical connection means (6) which electrically connect said at least one current cable (4) to said heating element (5) and which comprise:
- a first circuit section comprising:
a bush (8) which is made of conductive material and is electrically connected to a first conductor wire (51) of said cable (4) and is mounted on a connector 7 mechanically connected to the handpiece (28) and to the supply pipe (14);
- at least one wall (3) of said air through-flow chamber (2), which is made of electrically conductive material and is in electrical contact with said bush (8) and with a first pole (34) of said heating element (5);
- a second circuit section comprising:
- a first resilient member (9) which is made of electrically conductive material and is electrically connected to a second conductor wire (52) of said cable (4), being mounted on said connector (7) and electrically insulated from said bush (8);
- a pawl (19) which is made of electrically conductive material and is mounted inside said air through-flow chamber (2) so as to press against said first resilient member (9), being electrically insulated from said bush (8) and from said at least one wall (3) of said air through-flow chamber (2) and electrically in contact with said first resilient member (9) and with a second pole (35) of said heating element (5).

10. Blower according to one or more of the preceding claims, **characterized in that** it comprises at least one protective casing (26) which is made of a thermally insulating material and covers externally at least one gripping portion (42) of said handpiece (28) intended to be gripped by a user during operation of said blower (10).
